(19) Europäisches Patentamt
European Patent Office
Office européen des brevets

(11) **EP 4 712 152 A1**

(12) **EUROPEAN PATENT APPLICATION**

(43) Date of publication:
**18.03.2026 Bulletin 2026/12**

(21) Application number: **25200118.5**

(22) Date of filing: **04.09.2025**

(51) International Patent Classification (IPC):
*H01M 4/04* (2006.01)   *H01M 4/131* (2010.01)
*H01M 4/136* (2010.01)   *H01M 4/525* (2010.01)
*H01M 4/62* (2006.01)   *H01M 10/0585* (2010.01)
*H01M 4/02* (2006.01)

(52) Cooperative Patent Classification (CPC):
**H01M 4/623; H01M 4/0404; H01M 4/131;
H01M 4/136; H01M 4/525; H01M 4/622;
H01M 10/0585;** H01M 2004/028; H01M 2300/0068

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **12.09.2024 KR 20240124427**

(71) Applicant: SAMSUNG SDI CO., LTD.
**Yongin-si, Gyeonggi-do 17084 (KR)**

(72) Inventors:
• KIM, Jinhee
**17084 Gyeonggi-do (KR)**
• YOU, Hoseon
**17084 Gyeonggi-do (KR)**
• KANG, Dongwoo
**17084 Gyeonggi-do (KR)**
• OH, Daeyang
**17084 Gyeonggi-do (KR)**

(74) Representative: **Michalski Hüttermann & Partner
Patentanwälte mbB
Kaistraße 16A
40221 Düsseldorf (DE)**

(54) **POSITIVE ELECTRODE FOR ALL-SOLID-STATE BATTERY, ALL-SOLID-STATE BATTERY INCLUDING THE SAME, AND METHOD OF MANUFACTURING THE SAME**

(57)   Disclosed are positive electrodes, all-solid-state batteries, and fabrication methods thereof. The positive electrode includes a positive electrode current collector, and a positive electrode active material layer on the positive electrode current collector. The positive electrode active material layer includes a sulfide-based solid electrolyte, a binder that includes a first non-aqueous binder and a second non-aqueous binder, and a positive electrode active material. The first non-aqueous binder includes a fluorine-based binder. The second non-aqueous binder includes an acrylate-based binder.

FIG. 7

**Description**

CROSS-REFERENCE TO RELATED APPLICATION

This application claims priority under 35 U.S.C § 119 to Korean Patent Application No. 10-2024-0124427 filed on September 12, 2024 in the Korean Intellectual Property Office, the disclosure of which is hereby incorporated by reference in its entirety.

BACKGROUND

The present disclosure relates to a positive electrode for an all-solid-state battery, an all-solid-state battery including the positive electrode, and a method of manufacturing the positive electrode, and more particularly, to a positive electrode including two or more non-aqueous binders, an all-solid-state battery including the positive electrode, and a method of manufacturing the positive electrode.

There is increasing presence of high-energy density and safe batteries driven by industrial demands. For example, lithium ion batteries are being commercialized not only in formation-related and communication devices, but also in the automotive industry. In the automotive industry, safety is emphasized due to its direct relation to human safety.

Some all-solid-state batteries are batteries in which electrolyte solutions are replaced with solid electrolytes. As all-solid-state batteries do not use flammable organic dispersion mediums, the possibility of fire or explosion may be significantly reduced even in the event of short-circuit. Therefore, compared to lithium ion batteries that use electrolyte solutions, such all-solid-state batteries may exhibit increased safety.

SUMMARY

An example embodiment of the present disclosure includes a positive electrode with an increased adhesion between a positive electrode current collector and a positive electrode active material layer for an all-solid-state battery.

An example embodiment of the present disclosure includes an all-solid-state battery including the positive electrode and having improved stability and electrochemical characteristics.

According to an example embodiment of the present disclosure, a positive electrode for an all-solid-state battery may include a positive electrode current collector; and a positive electrode active material layer on the positive electrode current collector. The positive electrode active material layer may include a sulfide-based solid electrolyte; a binder that includes a first non-aqueous binder and a second non-aqueous binder; and a positive electrode active material. The first non-aqueous binder may include a fluorine-based binder. The second non-aqueous binder may include an acrylate-based binder.

According to an example embodiment of the present disclosure, a method of manufacturing a positive electrode for an all-solid-state battery may include preparing a slurry; and coating on a positive electrode current collector the slurry to form a positive electrode active material layer. Preparing the slurry may include mixing a positive electrode active material, a sulfide-based solid electrolyte, and a binder in a non-polar solvent. The binder may include a first non-aqueous binder including a fluorine-based binder; and a second non-aqueous binder including an acrylate-based binder.

According to an example embodiment of the present disclosure, an all-solid-state battery may include a positive electrode layer and a negative electrode layer that are opposite to each other; and a solid electrolyte layer between the positive electrode layer and the negative electrode layer. The positive electrode layer may include a positive electrode current collector and a positive electrode active material layer on the positive electrode current collector. The positive electrode active material layer may include a positive electrode active material, a binder, and a sulfide-based solid electrolyte. The binder may include a first non-aqueous binder including a fluorine-based binder; and a second non-aqueous binder including an acrylate-based binder.

BRIEF DESCRIPTION OF DRAWINGS

FIG. 1 illustrates a cross-sectional view showing an all-solid-state battery according to an example embodiment of the present disclosure.

FIG. 2 illustrates a cross-sectional view showing an all-solid-state battery according to an example embodiment of the present disclosure.

FIGS. 3 and 4 respectively illustrate a plan view and a cross-sectional view showing an all-solid-state battery according to an example embodiment of the present disclosure.

FIG. 5 illustrates a cross-sectional view showing an all-solid-state battery according to an example embodiment of the present disclosure.

FIG. 6 illustrates a cross-sectional view showing an all-solid-state battery including a gasket structure according to an example embodiment of the present disclosure.

FIG. 7 illustrates an enlarged view showing section M of FIG. 1.

FIG. 8 illustrates a conceptual diagram showing a method of manufacturing a positive electrode for an all-solid-state battery according to an example embodiment of the present disclosure.

FIG. 9 illustrates a conceptual diagram showing a slitting process according to an example embodiment of the present disclosure.

FIG. 10 illustrates a diagram showing measurement results of lifespan evaluation of Embodiment and Comparative 3.

FIG. 11 illustrates a diagram showing measurement results of lifespan evaluation of Embodiment and Comparative 4.

FIG. 12 is a flow chart illustrating a method of manufacturing a positive electrode for an all-solid-state battery, according to an example embodiment.

## DETAILED DESCRIPTION OF EMBODIMENTS

In order to sufficiently understand the configuration and effect of the present disclosure, some example embodiments of the present disclosure are described with reference to the accompanying drawings. It may be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components are exaggerated for effectively explaining the technical contents. Like reference numerals refer to like elements throughout the specification.

Some example embodiments detailed in this description are discussed with reference to sectional and/or plan views as ideal example views of the present disclosure. In the drawings, thicknesses of layers and regions may be exaggerated for effectively explaining the technical contents. Accordingly, regions illustrated as examples in the drawings have general properties, and shapes of regions illustrated as examples in the drawings are used to disclose specific shapes but not limited to the scope of the present disclosure. It is understood that, although the terms "first," "second," "third," and the like, may be used herein to describe various elements, these elements may not be limited by these terms. These terms are only used to distinguish one element from another element. The example embodiments explained and illustrated herein include complementary embodiments thereof.

The terminology used herein is for the purpose of describing particular embodiments only and is not intended to limit the present disclosure. As used herein, the singular forms are intended to include the plural forms as well. The terms 'comprises/includes' and/or 'comprising/including' used in the specification do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and then from this, an average particle diameter ($D_{50}$) value may be obtained through a calculation. Dissimilarly, a laser scattering method may be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

When the terms "about" or "substantially" are used in this specification in connection with a numerical value, it is intended that the associated numerical value include a tolerance of $\pm 10\%$ around the stated numerical value. When ranges are specified, the range includes all values therebetween such as increments of 0.1%.

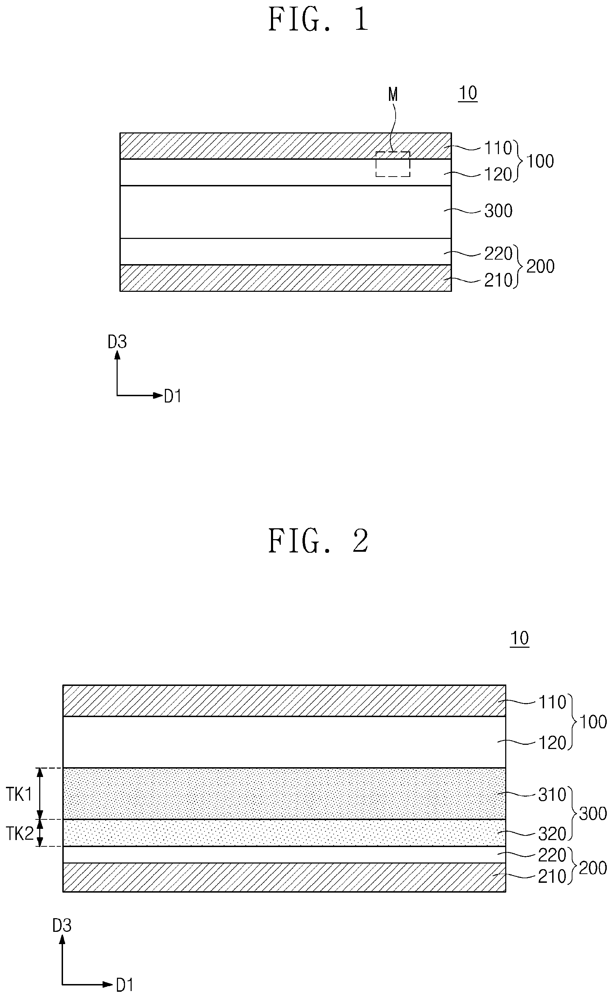

FIG. 1 illustrates a cross-sectional view showing an all-solid-state battery 10 according to an example embodiment of the present disclosure.

Referring to FIG. 1, the all-solid-state battery 10 according to an example embodiment may include a positive electrode layer 100, a negative electrode layer 200 opposite the positive electrode layer 100, and a solid electrolyte layer 300 between the positive electrode layer 100 and the negative electrode layer 200. The present disclosure, however, is not limited thereto, and the all-solid-state battery 10 may further include an additional functional layer, such as an adhesion enhancement layer, disposed between the positive electrode layer 100 and the solid electrolyte layer 300, or between the negative electrode layer 200 and the solid electrolyte layer 300.

The positive electrode layer 100 of an example embodiment may include a positive electrode current collector 110, and a positive electrode active material layer 120 disposed on the positive electrode current collector 110. The positive electrode active material layer 120 may include a positive electrode active material, a solid electrolyte, a conductive material, and a binder.

The positive electrode current collector 110 may provide a reference surface on which the positive electrode active material layer 120 is disposed. The positive electrode current collector 110 may include a plate or foil including, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from the configuration illustrated in FIG. 1, in an example embodiment of the present disclosure, the positive electrode current collector 110 may be omitted. Although not shown, in order to increase an adhesion between the positive electrode current collector 110 and the positive electrode active material layer 120, a carbon layer of $\geq$ **0.1** $\mu$m to $\leq 4$ $\mu$m in thickness may further be disposed between the positive electrode current collector 110 and the positive electrode active material layer 120.

The positive electrode active material layer 120 may include a positive electrode active material, a solid electrolyte, a conductive material, and a binder.

The positive electrode active material may include a material that can reversibly absorb and desorb lithium ions. The positive electrode active material may include, for example, at least one of a lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material may be included alone or in a mixture of two or more substances.

The lithium transition metal oxide may be or include, for example, a compound represented by one of $Li_aA_{1-b}B_bD_2$ (where $0.90 \leq a \leq 1$ and $0 \leq b \leq 0.5$), $Li_aE_{1-b}B_bO_{2-c}D_c$ (where $0.90 \leq a \leq 1$, $0 \leq b \leq 0.5$, and $0 \leq c \leq 0.05$), $LiE_{2-b}B_bO_{4-c}D_c$ (where $0 \leq b \leq 0.5$ and $0 \leq c \leq 0.05$), $Li_aNi_{1-b-c}Co_bB_cD_\alpha$ (where $0.90 \leq a \leq 1$, $0 \leq b \leq 0.5$, $0 \leq c \leq 0.05$, and $0 < \alpha < 2$), $Li_aNi_{1-b-c}Co_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_{1-b-c}Mn_bB_cD_\alpha$ (where $0.90 \leq a \leq 1$, $0 \leq b \leq 0.5$, $0 \leq c \leq 0.05$, and $0 < \alpha \leq 2$), $Li_aNi_{1-b-c}Mn_bB_cO_{2-\alpha}F_\alpha$ (where $0.90 \leq a \leq 1$, $0 \leq b \leq 0.5$, $0 \leq c \leq 0.05$, and $0 < \alpha < 2$), $Li_aNi_bE_cG_dO_2$ (where $0.90 \leq a \leq 1$, $0 \leq b \leq 0.9$, $0 \leq c \leq 0.5$, and $0.001 \leq d \leq 0.1$), $Li_aNi_bCo_cMn_dG_eO_2$ (where $0.90 \leq a \leq 1$, $0 \leq b \leq 0.9$, $0 \leq c \leq 0.5$, $0 \leq d \leq 0.5$, and $0.001 \leq e \leq 0.1$), $Li_aNiG_bO_2$ (where $0.9 \leq a \leq 1$ and $0.001 \leq b \leq 0.1$), $Li_aCoG_bO_2$ (where $0.90 \leq a \leq 1$ and $0.001 \leq b \leq 0.1$), $Li_aMnG_bO_2$ (where $0.90 \leq a \leq 1$ and $0.001 \leq b \leq 0.1$), $Li_aMn_2G_bO_4$ (where $0.90 \leq a \leq 1$ and $0.001 \leq b \leq 0.1$), $QO_2$, $QS_2$, $LiQS_2$, $V_2O_5$, $LiV_2O_5$, $LiIO_2$, $LiNiVO_4$, $Li_{3-f}J_2(PO_4)_3$ (where $0 \leq f \leq 2$), $Li_{3-f}Fe_2(PO_4)_3$ (where $0 \leq f \leq 2$), $LiFePO_4$. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material may include, for example, a lithium salt of a transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of or include cations and anions are arranged displaced from each other by 1/2 of a ridge of a unit lattice. The lithium transition metal oxide having the layered rock salt type structure may be or include a ternary lithium transition metal oxide, such as $LiNi_xCo_yAl_zO_2$ (NCA) or $LiNi_xCo_yMn_zO_2$ (NCM) (where $0 < x < 1, 0 < y < 1, 0 < z < 1$, and $x+y+z=1$). When the positive electrode active material includes a ternary lithium transition metal oxide having the layered rock salt type structure, the all-solid-state battery 10 may improve in energy density and thermal stability.

The compound included in the positive electrode active material may be covered with a coating layer (not shown). The positive electrode active material may be included in a mixture of the compound and a compound to which the coating layer is added. The coating layer added to a surface of the positive electrode active material may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, $Li_2O$-$ZrO_2$ (LZO). A method of forming the coating layer may be or include any one of methods that do not adversely affect physical characteristics of the positive electrode active material. For example, spray coating or immersion may be utilized to form the coating layer.

When the positive electrode active material includes nickel (Ni) as a ternary lithium transition metal oxide such as NCA or NCM, a capacity density of the all-solid-state battery 10 may increase to reduce metal elution of the positive electrode active material in a charged state. Thus, the all-solid-state battery 10 may improve in cycle characteristics in a charged state. The language "cycle characteristics" may refer to properties that indicate the degree to which the all-solid-state battery 10 is degraded due to charging and discharging. For example, the all-solid-state battery 10 with high cycle characteristics may degrade less due to charging and discharging, while the all-solid-state battery 10 with low cycle characteristics may degrade more due to charging and discharging.

The positive electrode active material may have, for example, a substantially spherical or substantially oval particle shape. There is no limitation on a particle diameter and an amount of the positive electrode active material.

The solid electrolyte may have a particle shape. The solid electrolyte may be dispersed between the positive electrode active materials. The solid electrolyte may include a sulfide-based solid electrolyte with desired or improved lithium ion conductivity. The sulfide-based solid electrolyte may include, for example, at least one of $Li_2S$-$P_2S_5$, $Li_2S$-$P_2S_5$-LiX (where X is a halogen element), $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are each a positive integer, and "Z" is or includes at least one of Ge, Zn, and Ga), $Li_2S$-$GeS_2$, $Li_2S$-$SiS_2$-$Li_3PO_4$, $Li_2S$-$SiS_2$-$Li_pMO_q$ (where p and q are each a positive integer, and "M" is or includes at least one of P, Si, Ge, B, Al, Ga, and In), $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$).

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

Dissimilarly, the sulfide-based solid electrolyte may be the same as a solid electrolyte included in the solid electrolyte layer 300 which is discussed below.

The argyrodite-type solid electrolyte may have a density in a range of $\geq$ 1.5 g/cc to $\leq$ 2.0 g/cc. As the argyrodite-type solid electrolyte has a density that is equal to or greater than about 1.5 g/cc, it may be possible to decrease an internal resistance of an all-solid-state battery and to reduce or prevent a solid electrolyte layer from short-circuit and penetration caused by the formation of lithium dendrite. The solid electrolyte may have an elastic modulus in a range of, for example, about 15 GPa to $\leq$ 35 GPa.

The solid electrolyte included in the positive electrode active material layer 120 may have a medium-sized average particle diameter ($D_{50}$) that is less than the particle diameter of a solid electrolyte included in the solid electrolyte layer 300. For example, the medium-sized average particle diameter ($D_{50}$) of the solid electrolyte in the positive electrode active material layer 120 may be about equal to or less than about 90%, equal to or less than about 80%, equal to or less than about 70%, equal to or less than about 60%, equal to or less than about 50%, equal to or less than about 40%, equal to or less than about 30%, or equal to or less than about 20% of the medium-sized average particle diameter ($D_{50}$) of a solid electrolyte included in the solid electrolyte layer 300. The medium-sized average particle diameter ($D_{50}$) may be a median diameter measured by a laser particle size distribution analyzer.

The positive electrode active material layer 120 may include a conductive material. The conductive material may have conductivity without causing chemical change to the all-solid-state battery 10 to increase conductivity of the positive electrode active material and the solid electrolyte.

The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may include a material that adheres the positive electrode active material, the solid electrolyte, and the conductive material included in the positive electrode active material layer 120 together, and that improves an adhesion between the positive electrode active material layer 120 and the positive electrode current collector 110. The binder may include, for example, one or more of polyvinylidenefluoride, styrene butadiene rubber (SBR), polytetrafluoroethylene, vinylidenefluoride/hexafluoropropylene copolymers, polyvinylidenefluoride/hexafluoropropylene copolymers, polyacrylonitrile, and polymethyl methacrylate.

Based on the total 100 parts by weight of the positive electrode active material, the solid electrolyte, the conductive material, and the binder, the positive electrode active material may be included in an amount in a range of $\geq$ 85 parts by weight to $\leq$ 92 parts by weight in the positive electrode active material layer 120. Based on the total 100 parts by weight of the positive electrode active material, the solid electrolyte, the conductive material, and the binder, the positive electrode active material may be included in an amount of $\geq 0.5$ parts by weight to $\leq 1.5$ parts by weight in the positive electrode active material layer 120.

Based on 100 parts by weight of the solid electrolyte, the conductive material may be included in an amount in a range of $\geq 1$ part by weight to $\leq 50$ parts by weight in the positive electrode active material layer 120. When the positive electrode active material layer 120 includes the conductive material having an amount that is less than about 1 part by weight based on 100 parts by weight of the solid electrolyte, a proportion of the conductive material may decrease to reduce electrical conductivity of the positive electrode active material layer 120. When the positive electrode active material layer 120 includes the conductive material in an amount that is greater than about 50 parts by weight based on 100 parts by weight of the solid electrolyte, a proportion of the conductive material may substantially increase to cause incomplete formation of a coating layer that covers a surface of the solid electrolyte.

The positive electrode active material layer 120 may further include an additive, such as a filler, a coating agent, a dispersant, and an ion conductivity agent, in addition to the positive electrode active material, the solid electrolyte, the conductive material, and the binder.

Referring to FIG. 1, the negative electrode layer 200 may include a negative electrode current collector 210 and a negative electrode active material layer 220 on the negative electrode current collector 210. The negative electrode active material layer 220 may include a negative electrode active material and a binder.

The negative electrode current collector 210 may provide a reference surface on which the negative electrode active material layer 220 is disposed. The negative electrode current collector 210 may include a material that does not react, or does not substantially react, with lithium, for example, a material that does not form an alloy or a compound with lithium. For example, the negative electrode current collector 210 may include a metal such as or including at least one of copper (Cu), stainless steel, titanium (Ti), iron (Fe), cobalt (Co), and nickel (Ni), but the present disclosure is not limited thereto, and any material suitable for electrode current collectors may be possibly included. A thickness of the negative electrode current collector 210 may range from about 1 $\mu$m to $\leq 20$ $\mu$m, for example, from about 5 $\mu$m to $\leq 15$ $\mu$m or from about 7 $\mu$m to $\leq 10$ $\mu$m.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode active material included in the negative electrode active material layer 220 may have a particle shape. The negative electrode active material having a particle shape may have a medium-sized average particle diameter ($D_{50}$) in a range of, for example, equal to or less than about 4 $\mu$m, equal to or less than about 2 $\mu$m, equal to or less than about 1 $\mu$m, or equal to or less than about 900 nm. The medium-sized average particle diameter ($D_{50}$) of the negative electrode active material may range, for example, from about 10 $\mu$m to $\leq 4$ $\mu$m, from about 10 $\mu$m to $\leq 2$ $\mu$m, or from about 10 nm to $\leq 900$ nm. As the negative electrode active material has a medium-sized average particle diameter ($D_{50}$) that falls within the range above, absorption and/or desorption of lithium may be more readily achieved during charging and discharging. The medium-sized average particle diameter ($D_{50}$) may be a median diameter measured by a laser particle size distribution analyzer.

The negative electrode active material may include, for example, one or more of a carbon-based negative electrode active material, a metallic negative electrode active material, and a metalloid negative electrode active material.

The carbon-based negative electrode active material may be amorphous carbon. The amorphous carbon may be or include, for example, at least one of carbon black (CB), acetylene black (AB), furnace black (FB), ketjen black (KB), or graphene, but the present disclosure is not limited thereto. The amorphous carbon may be or include carbon that either lacks crystallinity or has substantially low crystallinity, and may be distinguished from crystalline carbon or graphite-based carbon.

The metallic or metalloid negative electrode active material may include one or more of gold (Au), platinum (Pt), palladium (Pd), silicon (Si), silver (Ag), aluminum (Al), bismuth (Bi), tin (Sn), and zinc (Zn), but the present disclosure is not limited thereto, and may be or include a metallic or metalloid negative electrode active material that forms an alloy or compound with lithium. As nickel (Ni) does not form an alloy with lithium, the nickel (Ni) may not be classified as the metallic negative electrode active material.

The negative electrode active material layer 220 may include one of the materials mentioned above, or a mixture of different ones of the materials mentioned above. For example, the negative electrode active material layer 220 may include only amorphous carbon, or one or more of gold (Au), platinum (Pt), palladium (Pd), silicon (Si), silver (Ag), aluminum (Al), bismuth (Bi), tin (Sn), and zinc (Zn).

In an example embodiment, the negative electrode active material layer 220 may include a mixture of amorphous carbon and at least one of gold (Au), platinum (Pt), palladium (Pd), silicon (Si), silver (Ag), aluminum (Al), bismuth (Bi), tin (Sn), and zinc (Zn). In the mixture of amorphous carbon and a material such as or including gold (Au), the amorphous carbon and the material may be mixed in a weight ratio in a range of, for example, about 10:1 to about 1:2, about 5:1 to about 1:1, or about 4:1 to about 2:1, but the present disclosure is not necessarily limited thereto and the weight ratio may be selected based on required properties of the all-solid-state battery 10. As the negative electrode active material has such composition, the all-solid-state battery 10 may improve in cycle characteristics.

The binder included in the negative electrode active material layer 220 may include, for example, at least one of styrene-butadiene rubber (SBR), polytetrafluoroethylene, polyvinylidenefluoride, polyethylene, vinylidenefluoride/hexafluoropropylene copolymers, polyvinylidenefluoride/hexafluoropropylene copolymers, polyacrylonitrile, or polymethylmethacrylate, but the present disclosure is not limited thereto. The binder may be configured as a single binder or a plurality of different binders.

As the negative electrode active material layer 220 includes the binder, the negative electrode active material layer 220 may be stably formed on the negative electrode current collector 210. For example, an increased adhesion may be exhibited between the negative electrode active material layer 220 and the negative electrode current collector 210. In addition, the occurrence of cracks in the negative electrode active material layer 220 may be reduced or suppressed despite the change in volume and/or the relative position of the negative electrode active material layer 220 during charging and discharging. When the negative electrode active material layer 220 does not include a binder, the negative electrode active material layer 220 may be readily separated from the negative electrode current collector 210. As the negative electrode active material layer 220 is separated from the negative electrode current collector 210, on a region where the negative electrode current collector 210 is exposed, the negative electrode current collector 210 may be in contact with the solid electrolyte layer 300, and thus there may be an increase in the probability of the occurrence of short circuit.

The negative electrode active material layer 220 may be manufactured by, for example, providing on the negative electrode current collector 210 a mixture in which a material of the negative electrode active material layer 220 is dispersed. As the binder is included in the material of the negative electrode active material layer 220, it may be possible to stably disperse the negative electrode active material into the mixture. For example, when screen printing is employed to coat the mixture on the negative electrode current collector 210, it may be possible to reduce or suppress a screen clogging caused by the binder (e.g., a clogging resulting from aggregates of the negative electrode active material).

The negative electrode active material layer 220 may further include a different additive in addition to the negative electrode active material and the binder. For example, the negative electrode active material layer 220 may further include a filler, a coating agent, a dispersant, an ion conductivity agent, and so forth.

The negative electrode active material layer 220 may have a thickness that is less than the thickness of the positive electrode active material layer 120. For example, the thickness of the negative electrode active material layer 220 may be equal to or less than about 50%, equal to or less than about 40%, equal to or less than about 30%, equal to or less than about 20%, equal to or less than about 10%, or equal to or less than about 5% of the thickness of the positive electrode active material layer 120. The thickness of the negative electrode active material layer 220 may range, for example, from about 1 $\mu$m to $\leq 20$ $\mu$m, from about 2 $\mu$m to $\leq 10$ $\mu$m, or from about 3 $\mu$m to $\leq 7$ $\mu$m. When the negative electrode active material layer 220 has a substantially small thickness, e.g., less than about 1 $\mu$m, lithium dendrite formed between the negative electrode active material layer 220 and the negative electrode current collector 210 may collapse the negative electrode active material layer 220, thereby reducing cycle characteristics of the all-solid-state battery 10. When the negative electrode active material layer 220 has a substantially large thickness, e.g., greater than about 20 $\mu$m, the all-solid-state battery 10 may have a reduced energy density and an internal resistance of the all-solid-state battery 10 may increase due to the negative electrode active material layer 220, thereby reducing cycle characteristics of the all-solid-state battery 10.

A reduction in thickness of the negative electrode active material layer 220 may cause, for example, a decrease in charge capacity of the negative electrode active material layer 220. The charge capacity of the negative electrode active material layer 220 may be equal to or less than about 50%, equal to or less than about 40%, equal to or less than about 30%, equal to or less than about 20%, equal to or less than about 10%, equal to or less than about 5%, or equal to or less than about 2% of the charge capacity of the positive electrode active material layer 120. The charge capacity of the negative electrode active material layer 220 may be about 0.1% to $\leq 50\%$, about 0.1% to $\leq 40\%$, about 0.1% to $\leq 30\%$, about 0.1% to $\leq 20\%$, about 0.1% to $\leq 10\%$, or about 0.1% to $\leq 2\%$ of the charge capacity of the positive electrode active material layer 120. When the negative electrode active material layer 220 has a substantially small charge capacity, the negative electrode active material layer 220 may have a considerably small thickness, and when the thickness of the negative electrode active material layer 220 is considerably small, there may be the occurrence of failure, as discussed above. A substantial increase in charge capacity of the negative electrode active material layer 220 may cause the occurrence of failure due to a substantial increase in thickness of the negative electrode active material layer 220.

For example, a charge capacity of the positive electrode active material layer 120 may be obtained by multiplying a charge capacity density (mAh/g) of the positive electrode active material by a mass of the positive electrode active material in the positive electrode active material layer 120. When the positive electrode active material layer 120 includes various kinds of positive electrode active material, a value of [charge capacity density $\times$ mass] for each positive electrode active material may be calculated, and a sum of these values of the positive electrode active materials may be the charge capacity of the positive electrode active material layer 120. The charge capacity of the negative electrode active material layer 220 may also be calculated by the same method. For example, the charge capacity of the negative electrode active material layer 220 may be obtained by multiplying a charge capacity density (mAh/g) of the negative electrode active material by a mass of the negative electrode active material in the negative electrode active material layer 220. When the negative electrode active material layer 220 includes various kinds of negative electrode active material, a value of [charge capacity density × mass] for each negative electrode active material may be calculated, and a sum of these values of the negative electrode active materials may be the charge capacity of the negative electrode active material layer 220. Herein, the charge capacity density of each of the positive electrode active material and the negative electrode active material may be a capacity that is estimated using an all-solid-state half-cell in which lithium metal is included as a counter electrode. The charge capacity of each of the positive electrode active material layer 120 and the negative electrode active material layer 220 may be directly measured through charge capacity measurement using the all-solid-state half-cell. A charge capacity density may be obtained by dividing the measured charge capacity by a mass of each active material. In this description, the term "charge capacity" of each of the positive electrode active material layer 120 and the negative electrode active material layer 220 may refer to an initial charge capacity measured during a first cycle of charging.

Although not shown, a carbon layer may further be included to increase an adhesion between the negative electrode active material layer 220 and the solid electrolyte layer 300.

The solid electrolyte layer 300 may be provided between the positive electrode layer 100 and the negative electrode layer 200. The solid electrolyte layer 300 may include a sulfide-based solid electrolyte with desired or improved lithium ion conductivity. The solid electrolyte layer 300 may include a solid electrolyte that may be the same as, or different from, the solid electrolyte of the positive electrode active material layer 120.

In an example embodiment, the solid electrolyte included in the solid electrolyte layer 300 may be in an amorphous state, a crystalline state, or a mixed state of amorphous and crystalline. The solid electrolyte may include at least one of sulfur (S), phosphorus (P), and lithium (Li) among component elements included in the sulfide-based solid electrolyte mentioned above. For example, the solid electrolyte may be or include a material including $Li_2S$-$P_2S_5$. When a material including $Li_2S$-$P_2S_5$ is utilized as a sulfide-based solid electrolyte material of the solid electrolyte, a mixing molar ratio of $Li_2S$ and $P_2S_5$ may be in a range of about 50:50 to about 90:10.

The sulfide-based solid electrolyte may be or include an argyrodite-type compound including, for example, at least one of $Li_{7-x}PS_{6-x}Cl_x$ (where $0 \leq x \leq 2$), $Li_{7-x}PS_{6-x}Br_x$ (where $0 \leq x \leq 2$), and $Li_{7-x}PS_{6-x}I_x$ (where $0 \leq x \leq 2$). For example, the sulfide-based solid electrolyte may be or include an argyrodite-type compound including at least one of $Li_6PS_5Cl$, $Li_6PS_5Br$, and $Li_6PS_5I$.

Alternatively, the sulfide-based solid electrolyte may be or include an argyrodite-type compound including $Li_{7-a}M_aPS_{6-c}X_c$ (where $0 \leq a \leq 2$ and $0 \leq c \leq 2$). In the chemical formula above, X may be or include at least one of F, Br, Cl, or a combination thereof. M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of $\geq 1.5$ g/cc to $\leq 2.0$ g/cc. As the argyrodite-type solid electrolyte has a density of equal to or greater than about 1.5 g/cc, it may be possible to decrease an internal resistance of an all-solid-state battery and to hinder or prevent a solid electrolyte layer from short-circuit and penetration caused by the formation of lithium dendrite. The solid electrolyte may have an elastic modulus in a range of, for example, about 15 GPa to $\leq 35$ GPa.

The solid electrolyte layer 300 may further include a binder. The binder included in the solid electrolyte layer 300 may include at least one of styrene-butadiene rubber (SBR), polytetrafluoroethylene, polyvinylidenefluoride, polyethylene, but the present disclosure is not limited thereto. For example, the binder may include at least one of styrene-butadiene rubber, polytetrafluoroethylene, polyvinylidenefluoride, polyethylene, polyvinylalcohol, vinylidenefluoride/hexafluoropropylene copolymers, polyvinylidenefluoride/hexafluoropropylene copolymers, polyacrylonitrile, and polymethylmethacrylate. The binder of the solid electrolyte layer 300 may be the same as, or different from, the binder of the positive electrode active material layer 120 or the binder of the negative electrode active material layer 220.

FIG. 2 illustrates a cross-sectional view showing the all-solid-state battery 10, according to an example embodiment of the present disclosure

Referring to FIG. 2, the solid electrolyte layer 300 may include a first solid electrolyte layer 310 and a second solid electrolyte layer 320. The first solid electrolyte layer 310 may be adjacent to the positive electrode layer 100, and the second solid electrolyte layer 320 may be adjacent to the negative electrode layer 200.

The first solid electrolyte layer 310 and the second solid electrolyte layer 320 may have different thicknesses from each other. The first solid electrolyte layer 310 may have a first thickness TK1, and the second solid electrolyte layer 320 may have a second thickness TK2. The first thickness TK1 may be greater than the second thickness TK2. For example, the first thickness TK1 may be about 2 times to ≤ 100 times the second thickness TK2.

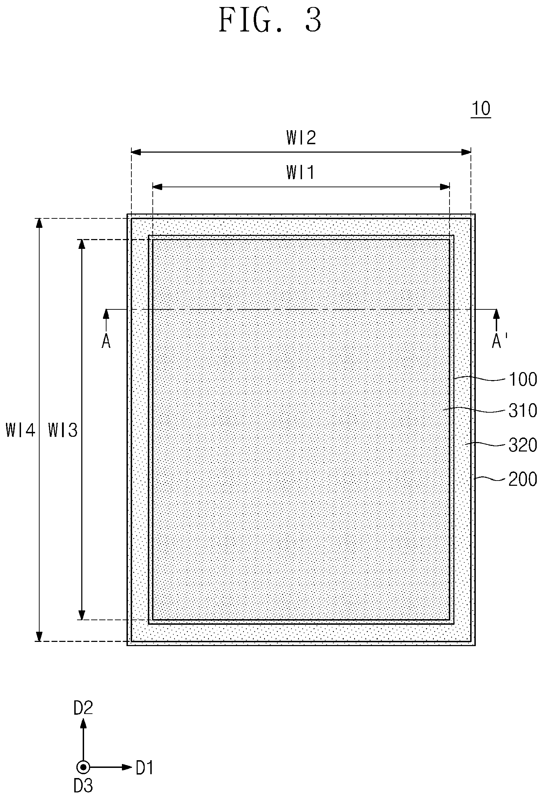

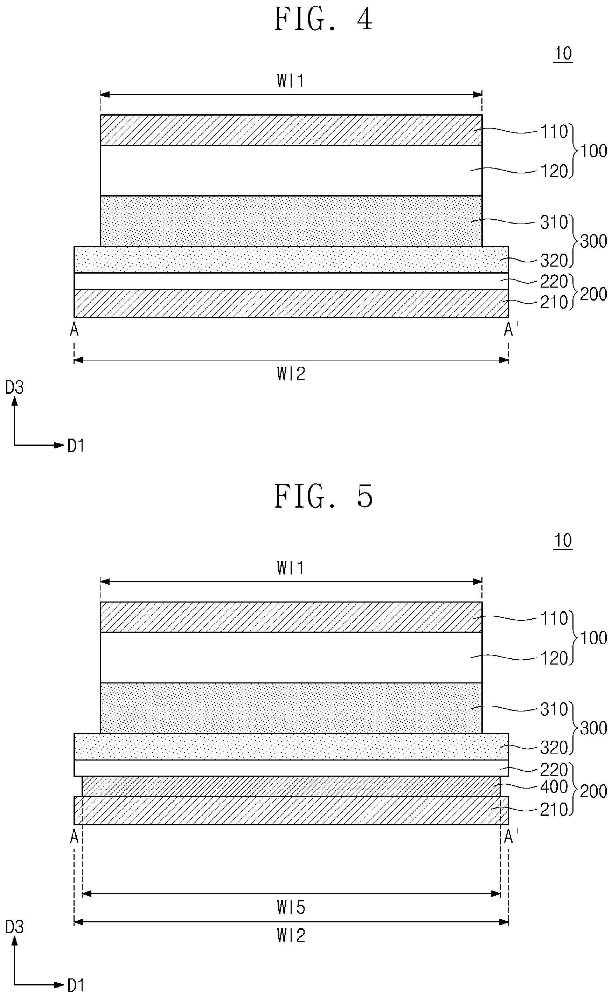

FIG. 3 illustrates a plan view showing the all-solid-state battery 10 according to an example embodiment of the present disclosure. FIG. 4 illustrates a cross-sectional view taken along line A-A' of FIG. 3. In the description that follows, a detailed description of technical features repetitive to those discussed above with reference to FIGS. 1 and 2 is omitted, and a difference thereof is discussed in detail.

Referring to FIGS. 3 and 4, an area of the positive electrode layer 100 and an area of the negative electrode layer 200 may be different from each other. For example, the area of the negative electrode layer 200 may be greater than the area of the positive electrode layer 100. The positive electrode layer 100 may vertically stake with the negative electrode layer 200. The positive electrode layer 100 may completely inwardly overlap the negative electrode layer 200.

In an example embodiment of the present disclosure, the first solid electrolyte layer 310 may have substantially the same area as the area of the positive electrode layer 100. The second solid electrolyte layer 320 may have substantially the same area as the area of the negative electrode layer 200.

The first solid electrolyte layer 310 may have a first width WI1 in a first direction D1. The second solid electrolyte layer 320 may have a second width WI2 in the first direction D1. The first width WI1 may be lower than the second width WI2. The first solid electrolyte layer 310 may have a third width WI3 in a second direction D2. The second solid electrolyte layer 320 may have a fourth width WI4 in the second direction D2. The third width WI3 may be lower than the fourth width WI4.

The all-solid-state battery 10 according to an example embodiment may be fabricated by forming a first stack of the positive electrode layer 100 and the first solid electrolyte layer 310, forming a second stack of the negative electrode layer 200 and the second solid electrolyte layer 320, and then laminating the first stack and the second stack.

FIG. 5 illustrates a cross-sectional view taken along line A-A' of FIG. 3, showing an all-solid-state battery according to an example embodiment of the present disclosure.

Referring to FIG. 5, the negative electrode layer 200 of the all-solid-state battery 10 may further include a lithium metal layer 400 between the negative electrode current collector 210 and the negative electrode active material layer 220. The lithium metal layer 400 may have an increased thickness when the all-solid-state battery 10 is charged. The negative electrode active material layer 220 may be configured as a protection layer for the lithium metal layer 400 and simultaneously or contemporaneously may reduce or suppress growth of lithium dendrite from the lithium metal layer 400.

The lithium metal layer 400 may be or include a metal thin layer including lithium or lithium alloy. The lithium alloy may be or include, for example, at least one of Li-Al alloy, Li-Sn alloy, Li-In alloy, Li-Ag alloy, Li-Au alloy, Li-Zn alloy, Li-Ge alloy, or Li-Si alloy, but any suitable lithium alloys may be included. The lithium metal layer 400 may include lithium or one of the alloys mentioned above. Alternatively, the lithium metal layer 400 may include various kinds of alloy.

The lithium metal layer 400 may have a fifth width WI5 in the first direction D1. The fifth width WI5 may be the same as or greater than the first width WI1. The fifth width WI5 may be the same as or less than the second width WI2. For example, the fifth width WI5 may be greater than the first width WI1 and lower than the second width WI2.

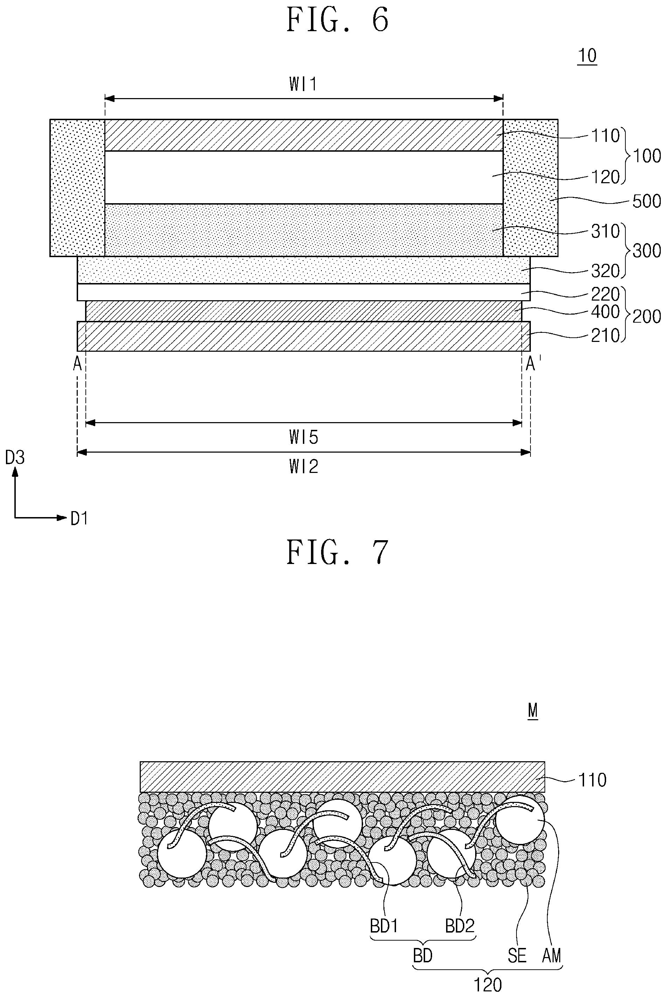

FIG. 6 illustrates a cross-sectional view showing an all-solid-state battery according to an example embodiment of the present disclosure.

Referring to FIG. 6, the all-solid-state battery 10 may include a gasket structure 500. A difference in area between the first stack and the second stack may produce a step difference on a lateral surface of the all-solid-state battery 10, and the gasket structure 500 may fill the step difference. The gasket structure 500 may surround lateral surfaces in the first and second directions D1 and D2 of the first stack of the all-solid-state battery 10. For example, a thickness of the gasket structure 500 may be substantially the same as the thickness of the first stack. Thus, even when the first stack and the second stack having different areas are stacked and pressed, the all-solid-state battery 10 may be hindered or prevented from damage to the step difference on the lateral surface. The expression "substantially the same thickness" may refer to a thickness that is sufficient to reduce or prevent damage to the step difference on the lateral surface of the all-solid-state battery 10 even when the first stack and the second stack having different areas are stacked and pressed.

FIG. 7 illustrates an enlarged view showing section "M" of FIG. 1. For brevity of description, omission is made to avoid a description repetitive to that discussed with respect to FIGS. 1 to 6.

Referring to FIG. 7, a positive electrode active material layer 120 may be provided on the positive electrode current collector 110. The positive electrode active material layer 120 may include a positive electrode active material AM, a sulfide-based solid electrolyte SE, and a binder BD.

The binder BD may be present in an amount in a range of ≥ 1 wt% to ≤ 1.5 wt% relative to 100 wt% of the positive electrode active material layer 120. When the amount of the binder BD falls within the range above, an all-solid-state battery may exhibit desired or improved stability and electrochemical properties.

For example, when the amount of the binder BD is greater than about 1.5 wt% relative to 100 wt% of the positive electrode active material layer 120, a cell resistance may be increased. As a result, the all-solid-state battery may have reduced lifespan efficiency and capacity.

When the amount of the binder BD is less than about 1.5 wt% relative to 100 wt% of the positive electrode active material layer 120, the low amount of the binder BD may cause a reduction in stability and adhesion between the positive electrode active material layer 120 and the positive electrode current collector 110.

The binder BD may include a first non-aqueous binder BD1 and a second non-aqueous binder BD2. The first non-aqueous binder BD1 may include a fluorine-based binder. The fluorine-based binder may include a polymer derived from a monomer including fluorine (F). The fluorine-based binder may include at least one of a fluoroalkyl group, a fluoroalkylene group, or a perfluoroalkyl group. The first non-aqueous binder BD1 may include, for example, at least one of poly(vinylidenefluoride-co-hexafluoropropylene) (P(VDF-HFP)), poly(vinylidenefluoride-co-trifluoroethylene) (P(VDF-TrFE)), poly(vinylidenefluoride-co-chlorotrifluoroethylene) (P(VDF-CTFE)), poly(vinylidenefluoride-co-tetrafluoroethylene) (P(VDF-TFE)), and poly(vinylidenefluoride-co-hexafluoropropylene-co-trifluoroethylene) (P(VDF-HFP-TrFE)).

The second non-aqueous binder BD2 may include an acrylate-based binder. The acrylate-based binder may include a polymer polymerized from a monomer including acrylate ($-CH_2=CHCOO-$). The second non-aqueous binder BD2 may include, for example, at least one of polyacrylic acid (PAA), polymethyl methacrylate (PMMA), poly(butyl acrylate), poly(ethyl acrylate), and poly(2-ethylhexyl acrylate).

An amount of the first non-aqueous binder BD1 in the binder BD may be the same as or greater than the amount of the second non-aqueous binder BD2 in the binder BD. The amount of the first non-aqueous binder BD1 may range from about 50 wt% to $\leq$ 90 wt% relative to 100 wt% of the binder BD. The amount of the second non-aqueous binder BD2 may range from about 10 wt% to $\leq$ 50 wt% relative to 100 wt% of the binder BD.

When the amount of each of, or of at least one of, the first and second non-aqueous binders BD1 and BD2 falls within the range above, an all-solid-state battery may exhibit desired or improved stability and electrochemical properties.

For example, when the amount of the first non-aqueous binder BD1 is greater than about 90 wt% relative to 100 wt% of the binder BD, and when the amount of the second non-aqueous binder BD2 is less than about 10 wt% relative to 100 wt% of the binder BD, a reduced adhesion may be provided between the positive electrode active material layer 120 and the positive electrode current collector 110. When the amount of the first non-aqueous binder BD1 is greater than about 90 wt% relative to 100 wt% of the binder BD, the positive electrode active material layer 120 may be separated from the positive electrode current collector 110 during a slitting process which is discussed below. Thus, there may be an increase in failure rate.

When the amount of the first non-aqueous binder BD1 is less than about 50 wt% relative to 100 wt% of the binder BD, and when the amount of the second non-aqueous binder BD2 is greater than about 50 wt% relative to 100 wt% of the binder BD, there may be an increase in viscosity of slurry including the positive electrode active material and the sulfide-based solid electrolyte. The increase in viscosity of slurry may cause a non-uniform mixing of the binder with the positive electrode active material and the sulfide-based solid electrolyte in the slurry. The slurry may not be substantially uniformly coated on the positive electrode current collector 110.

An adhesion between the positive electrode active material layer 120 and the positive electrode current collector 110 may range from about 0.5 gf/mm to $\leq$ 2.5 gf/mm. The adhesion may refer to an adhesive force when the positive electrode current collector 110 is fixed and the positive electrode active material layer 120 is pulled at an angle of about 180°. The adhesion may indicate an adhesive force measured based on ASTM D903 standard. According to some example embodiments of the present disclosure, a positive electrode may be provided that has a desired or improved adhesion between the positive electrode active material layer 120 and the positive electrode current collector 110.

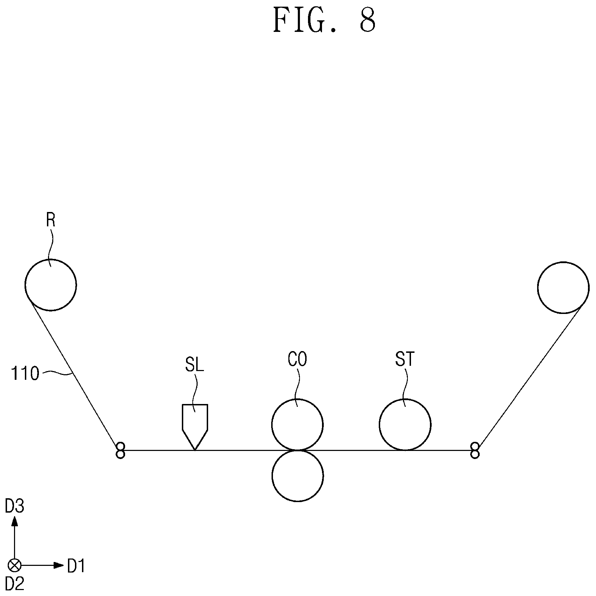

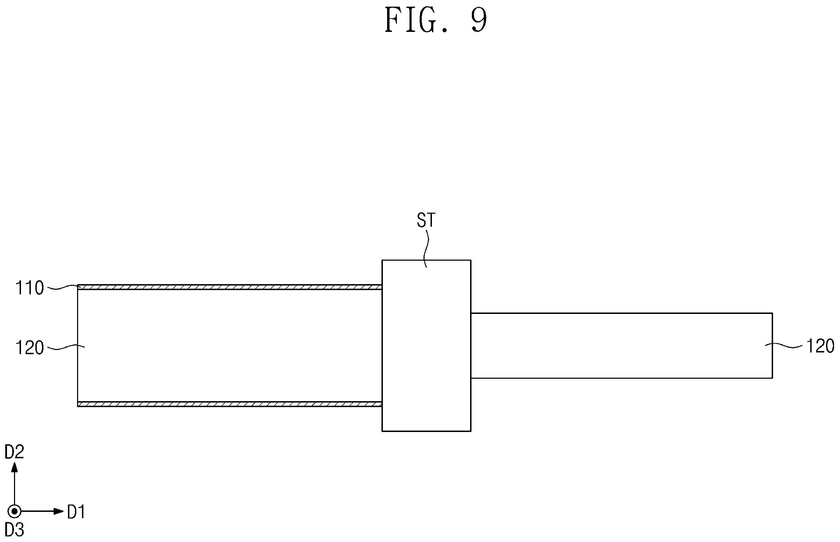

FIGS. 8 and 9 illustrate diagrams showing a method of manufacturing a positive electrode for an all-solid-state battery according to an embodiment of the present disclosure. For brevity of description, omission is made to avoid a description repetitive to that discussed in FIGS. 1 to 7.

Referring to FIGS. 8 and 9, a wound positive electrode current collector 110 may be unwound by a supply roll R. The positive electrode current collector 110 may move along a first direction D1.

A slurry may be prepared. The preparation of the slurry may include mixing a positive electrode active material, a sulfide-based solid electrolyte, and a binder in a non-polar solvent. The slurry may have viscosity in a range of $\geq$ 1,000 mPa·s to $\leq$ 10,000 mPa·s at room temperature (e.g., about 20°C). The viscosity may refer to, for example, a shear viscosity measured using Rheometer commercially available from Anton Paar Co. Ltd. For example, the viscosity may indicate a viscosity at a shear rate of about 10 (1/s) at room temperature (about 20°C).

When the viscosity of the slurry falls within the range above, the slurry may be substantially uniformly coated on the positive electrode current collector 110. For example, when the viscosity is less than about 1,000 mPa·s, the low slurry density may cause a rapid precipitation of the positive electrode active material. There may thus be an increase in variation of loading level of an electrode plate and impossibility in achieving a desired loading level. There may also be a reduction in efficiency of fabrication process. In this description, the term "loading level" may refer to an amount of an active material per unit area of an electrode, and may be a factor designed by considering a diffusion coefficient of lithium ions, conduction between particles, and a path to a current collector.

When the viscosity of the slurry is greater than about 10,000 mPa·s, a slurry mixing may be difficult to cause a reduction in electrochemical properties. In addition, there may be a restriction on slurry supply and a reduction in fabrication process.

The non-polar solvent may include at least one of butylate, toluene, xylene, anisole, hexane, heptane, dibromomethane, dichloroethane, ethanol, glycol ether, and a combination thereof.

The sulfide-based solid electrolyte may be reactive with a polar solvent, and thus a side reaction may occur when a polar solvent is included. In a method of manufacturing a positive electrode for an all-solid-state battery according to some example embodiments of the present disclosure, the non-polar solvent may be included to reduce or prevent the occurrence of side reactions. It may be possible to provide an all-solid-state battery with desired or improved electrochemical properties.

The binder in the slurry may be present in an amount in a range of $\geq 1$ wt% to $\leq 1.5$ wt% relative to 100 wt% of the slurry. When the amount of the binder falls within the range above, an all-solid-state battery may exhibit desired or improved stability and electrochemical properties.

For example, when the amount of the binder is greater than about 1.5 wt% relative to 100 wt% of a positive electrode active material layer 120, a cell resistance may be increased due to a reduction in ionic conductivity resulting from an increase in amount of the binder. An all-solid-state battery may have a reduced lifespan efficiency and capacity.

When the amount of the binder is less than about 1 wt% relative to 100 wt% of the slurry, there may be a reduction in stability and adhesion between the positive electrode active material layer 120 and the positive electrode current collector 110.

The binder may include a first non-aqueous binder and a second non-aqueous binder. The first non-aqueous binder may include a fluorine-based binder. The fluorine-based binder may include a polymer derived from a monomer including fluorine (F). The fluorine-based binder may include at least one of a fluoroalkyl group, a fluoroalkylene group, or a perfluoroalkyl group.

The first non-aqueous binder may include, for example, at least one of poly(vinylidenefluoride-co-hexafluoropropylene) (P(VDF-HFP)), poly(vinylidenefluoride-co-trifluoroethylene) (P(VDF-TrFE)), poly(vinylidenefluoride-co-chlorotrifluoroethylene) (P(VDF-CTFE)), poly(vinylidenefluoride-co-tetrafluoroethylene) (P(VDF-TFE)), and poly(vinylidenefluoride-co-hexafluoropropylene-co-trifluoroethylene) (P(VDF-HFP-TrFE)).

The second non-aqueous binder may include an acrylate-based binder. The acrylate-based binder may include a polymer polymerized from a monomer including acrylate ($-CH_2=CHCOO-$). The second non-aqueous binder may include, for example, at least one of polyacrylic acid (PAA), polymethyl methacrylate (PMMA), poly(butyl acrylate), poly(ethyl acrylate), and poly(2-ethylhexyl acrylate).

An amount of the first non-aqueous binder in the binder may be the same as or different from the amount of the second non-aqueous binder in the binder. The amount of the first non-aqueous binder may range from about 50 wt% to $\leq 90$ wt% relative to 100 wt% of the binder. The amount of the second non-aqueous binder may range from about 10 wt% to $\leq 50$ wt% relative to 100 wt% of the binder. When the amount of each of the first and second binders falls within the range above, an all-solid-state battery may exhibit desired or improved stability and electrochemical properties.

For example, when the amount of the first non-aqueous binder is greater than about 90 wt% relative to 100 wt% of the binder, and when the amount of the second non-aqueous binder is less than about 10 wt% relative to 100 wt% of the binder, a reduced adhesion may be exhibited between the positive electrode active material layer 120 and the positive electrode current collector 110.

When the amount of the first non-aqueous binder is less than about 50 wt% relative to 100 wt% of the binder, and when the amount of the second non-aqueous binder is greater than about 50 wt% relative to 100 wt% of the binder, there may be an increase in viscosity of the slurry, with the result that the slurry may not be uniformly coated on the positive electrode current collector 110 and the positive electrode active material layer 120 may not be uniformly formed on the positive electrode current collector 110.

The positive electrode active material, the sulfide-based solid electrolyte, and the binder may correspond to the positive electrode active material, the sulfide-based solid electrolyte, and the binder that are discussed above with reference to FIGS. 1 to 7.

A slurry supply SL may substantially uniformly supply the slurry onto the positive electrode current collector 110, and a coater CO may coat the slurry on the positive electrode current collector 110. In the coating process, the slurry may be dried or solidified, for example, in a range of at about 140°C to $\leq 170$°C. The coating process may include pressing the slurry. The coating process may form the positive electrode active material layer 120 on the positive electrode current collector 110. The positive electrode active material layer 120 may correspond to the positive electrode active material layer 120 discussed above with reference to FIG. 6.

An adhesion between the positive electrode active material layer 120 and the positive electrode current collector 110 may range from about 0.5 gf/mm to $\leq 2.5$ gf/mm. The adhesion may refer to an adhesive force when the positive electrode current collector 110 is fixed and the positive electrode active material layer 120 is pulled at an angle of about 180°. The adhesion may indicate an adhesive force measured based on ASTM D903 standard. According to some example embodiments of the present disclosure, a positive electrode may be provided that has a desired or improved adhesion between the positive electrode active material layer 120 and the positive electrode current collector 110.

As illustrated in FIG. 9, the positive electrode current collector 110 and the positive electrode active material layer 120 may be punched by a slitter ST. The slitting process may force the positive electrode current collector 110 and the positive electrode active material layer 120 to have substantially the same width. According to some example embodiments of the present disclosure, the binder may include the first non-aqueous binder and the second non-aqueous binder, and thus an improved adhesion may be provided between the positive electrode current collector 110 and the positive electrode active material layer 120. Although the slitter ST applies an external force to the positive electrode current collector 110 and the positive electrode active material layer 120, the positive electrode active material layer 120 may be stably placed on the positive electrode current collector 110. The slitting process may reduce or prevent the positive electrode active material layer 120 from separation. According to some example embodiments of the present disclosure, a method of manufacturing a positive electrode for an all-solid-state battery may provide improved stability and reliability.

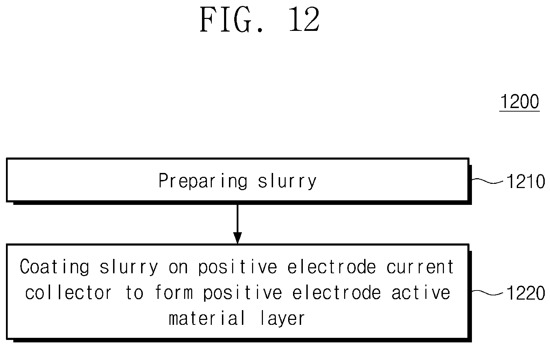

FIG. 12 is a flow chart illustrating a method of manufacturing a positive electrode for an all-solid-state battery, according to an example embodiment. In FIG. 12, the method 1200 includes operation 1210 of preparing a slurry. In examples, preparing the slurry includes mixing a positive electrode active material, a sulfide-based solid electrolyte, and a binder, in a non-polar solvent. For example, the binder includes a first non-aqueous binder including a fluorine-based binder, and a second non-aqueous binder including an acrylate-based binder. In another example, the binder in the positive electrode active material layer is present in an amount in a range of $\geq 1$ wt% to $\leq 1.5$ wt% relative to 100 wt% of the positive electrode active material layer. For example, an amount of the first non-aqueous binder in the binder is equal to or greater than an amount of the second non-aqueous binder in the binder. In other examples, the first non-aqueous binder in the binder is present in an amount in a range of $\geq 50$ wt% to $\leq 90$ wt% relative to 100 wt% of the binder, and the second non-aqueous binder in the binder is present in an amount in a range of $\geq 10$ wt% to $\leq 50$ wt% relative to 100 wt% of the binder.

In further examples, the first non-aqueous binder includes at least one of poly(vinylidenefluoride-co-hexafluoropropylene) (P(VDF-HFP)), poly(vinylidenefluoride-co-trifluoroethylene) (P(VDF-TrFE)), poly(vinylidenefluoride-co-chlorotrifluoroethylene) (P(VDF-CTFE)), poly(vinylidenefluoride-co-tetrafluoroethylene) (P(VDF-TFE)), and poly(vinylidenefluoride-co-hexafluoropropylene-co-trifluoroethylene) (P(VDF-HFP-TrFE)). In yet other examples, the non-polar solvent includes at least one of butylate, toluene, xylene, anisole, hexane, heptane, dibromomethane, dichloroethane, ethanol, glycol ether, and a combination thereof. For example, the slurry has a viscosity at a temperature of about 20°C in a range of $\geq 1,000$ mPa·s to $\leq 10,000$ mPa·s. In a further example, an adhesive force between the positive electrode active material layer and the positive electrode current collector is in a range of $\geq 0.5$ gf/mm to $\leq 2.5$ gf/mm.

Operation 1220 includes coating the slurry on a positive electrode current collector to form a positive electrode active material layer.

The present disclosure is discussed with reference to example embodiment examples and comparative examples.

Embodiment

5.0 g of $LiNi_{0.8}Co_{0.15}Mn_{0.05}O_2$ (NCM) powder was prepared as a positive electrode active material. A crystalline argyrodite-based solid electrolyte ($Li_6PS_5Cl$) was prepared as a solid electrolyte. A binder was prepared in which polyvinylidenefluoride hexafluoropropylene (PVDF-co-HFP) as a first non-aqueous binder was mixed with an acrylic binder (SX-A605 commercially available from Zeon Corporation) as a second non-aqueous binder. The first non-aqueous binder was present in an amount of 0.9 wt% relative to 100 wt% of the binder. The second non-aqueous binder was present in an amount of 0.3 wt% relative to 100 wt% of the binder. A carbon nano-fiber (CNF) was prepared as a conductive material. The positive electrode active material, the solid electrolyte, the conductive material, and the binder were mixed in a weight ratio of about 85 : 13.2 : 0.6 : 1.2 in an octyl acetate solvent to prepare a positive electrode slurry. The positive electrode slurry was coated on an aluminum positive electrode current collector, and then pressed to manufacture a positive electrode.

Preparation of Solid Electrolyte Layer:

$Li_6PS_5Cl$ as an argyrodite-type solid electrolyte was introduced to an isobutylyl isobutylate binder solution added with an acrylate-based polymer to prepare a solid electrolyte slurry (the solid electrolyte and the binder were mixed in a weight ratio of 98.7 : 1.3). The prepared solid electrolyte slurry was coated on a release film of polytetrafluoroethylene, and dried for 2 hours at 60°C to prepare a solid electrolyte layer of 100 $\mu$m in thickness.

Manufacture of Negative Electrode:

90 wt% of silver (Ag) nano-particles ($D_{50}$: 60 nm) and 10 wt% of carbon black were mixed in a water solvent to prepare a negative electrode coating layer slurry. The carbon black was a mixture of single particles having a particle diameter of 38 nm and secondary particles having a particle diameter of 275 nm in which primary particles having a particle diameter of 76 nm were aggregated. The slurry was coated on a foil-type current collector of stainless steel, and then dried to manufacture a negative electrode including a negative electrode coating layer of 12 $\mu$m in thickness and a current

collector of 10 μm in thickness.

Comparative 1

There was prepared a binder present in an amount of 0.8 wt% relative to 100 wt% of the positive electrode slurry. The positive electrode active material, the solid electrolyte, the conductive material, and the binder were mixed in a weight ratio of about 85.35 : 13.25 : 0.6 : 0.8 in the octyl acetate solvent. A positive electrode was manufactured in the same method as in Embodiment, with the difference discussed above.

Comparative 2

There was prepared a binder present in an amount of 2 wt% relative to 100 wt% of the positive electrode slurry. The positive electrode active material, the solid electrolyte, the conductive material, and the binder were mixed in a weight ratio of about 84.31 : 13.09 : 0.6 : 2 in the octyl acetate solvent. A positive electrode was manufactured in the same method as in Embodiment, with the difference discussed above.

Comparative 3

A positive electrode was manufactured in the same method as in Embodiment, with a difference that polyvinylidenefluoride (PVdF) was used alone as a binder.

Comparative 4

Polyvinylidenefluoride (PVdF) was used alone as a binder. There was prepared the binder present in an amount of 1 wt% relative to 100 wt% of the positive electrode slurry. The positive electrode active material, the solid electrolyte, the conductive material, and the binder were mixed in a weight ratio of about 85.17 : 13.23 : 0.6 : 1 in the octyl acetate solvent. A positive electrode was manufactured in the same method as in Embodiment, with the difference discussed above.

Evaluation 1: Adhesive Force

The positive electrode current collector was fixed, and the positive electrode was pulled at an angle of 180°. The adhesive force was measured based on ASTM D903 standard. The evaluation result of adhesive force is shown in Table 1 below.

Table 1:

|  | Adhesive force (gf/mm) |
|---|---|
| Embodiment | 0.8 |
| Comparative 1 | 0.3 |
| Comparative 2 | 0.9 |
| Comparative 3 | 0.68 |
| Comparative 4 | 0.5 |

Referring to Table 1, it may be observed that Embodiment exhibits an adhesive force that is better than the adhesive forces of Comparative 1, 3, and 4.

Evaluation 2: Viscosity

A shear viscosity was measured at 20°C using Rheometer MCR-302 commercially available from Anton Paar Co. Ltd, to determine viscosity of the positive electrode slurry. 10 ml of the positive electrode slurry was intruded to the equipment, and then the shear viscosity was measured.

Table 2:

|  | Viscosity (mPa·s) |
|---|---|
| Embodiment | 4,300 |

EP 4 712 152 A1

(continued)

|  | Viscosity (mPa·s) |
| --- | --- |
| Comparative 1 | 700 |
| Comparative 2 | 10,200 |
| Comparative 3 | 5,400 |
| Comparative 4 | 2,200 |

Referring to Table 2 above, it may be observed that a viscosity of Embodiment falls within the range from 1,000 mPa·s to 10,000 mPa·s. Referring to Tables 1 and 2, it may be observed that Comparative 2 has an adhesive force that is greater than the adhesive force of Embodiment because the binder of the Comparative 2 has an amount that is greater than the amount of the binder in Embodiment. It may thus be ascertained that a viscosity of Comparative 2 does not fall within the range from 1,000 cps to 10,000 cps.

Evaluation 3: Resistance

A direct current internal resistance (DCIR) of each of Embodiment, Comparative 2, and Comparative 3 was measured at 45°C and SOC 50%. The result of the measurements is listed in Table 3 below.

Table 3:

|  | DCIR (Ω) |
| --- | --- |
| Embodiment | 1.43 |
| Comparative 1 | 3 |
| Comparative 2 | 2.16 |
| Comparative 3 | 1.94 |

Referring to Table 3 above, it may be observed that a DCIR of Embodiment is less than the DCIR of Comparatives 3 and 4. Referring to Tables 1 and 3, it may be observed that a resistance of Embodiment is less than the resistance of Comparative 2. It may be ascertained that, in the case of Comparative 2, an adhesive force increases due to a high amount of the binder, but a resistance is high because the high amount of the binder leads to a reduction in ion conductivity.

Evaluation 4: Specific Capacity

The specific capacity of each of Embodiment, Comparative 2, Comparative 3, and Comparative 4 was measured. The all-solid-state batteries of Embodiment and comparative examples were charged at 0.5 C to 4.2 V. Afterwards, the all-solid-state batteries were discharged at 0.1 C to 3.0 V. Table 4 below shows specific capacities measured through that discussed above.

Table 4:

|  | Specific capacity (mAh/g) |
| --- | --- |
| Embodiment | 196.3 |
| Comparative 1 | 170.7 |
| Comparative 2 | 182.4 |
| Comparative 3 | 189.0 |

Referring to Table 4 above, it may be observed that a specific capacity of Embodiment is greater than those of Comparatives 3 and 4. Referring to Tables 1 and 4, it may be observed that a specific capacity of Embodiment is greater than the specific capacity of Comparative 2. It may be ascertained that, in the case of Comparative 2, an adhesive force increases due to a high amount of the binder, but a specific capacity is low because the high amount of the binder leads to a reduction in ion conductivity.

14

EP 4 712 152 A1

Evaluation 5: Lifespan Characteristics

Each of the all-solid-state batteries according to Embodiment and Comparative 3 was charged (0.33 C CC/CV charging 4.25 V 0.05 C cut) and discharged (0.33 C CC discharging 2.50 V cut) as a first cycle, and then, the all-solid-state battery was charged (1.0 C CC/CV charging 4.25 V 0.05 C cut) and discharged (0.5 C CC discharging 3.0 V cut) while monitoring cycles until a capacity retention rate reached 75%. A capacity retention rate at an $N^{th}$ cycle was calculated according to Mathematical Equation 1.

Mathematical Equation 1:

Capacity retention rate (%) = [discharge capacity at $N^{th}$ cycle / discharge capacity at $1^{st}$ cycle] $\times$ 100

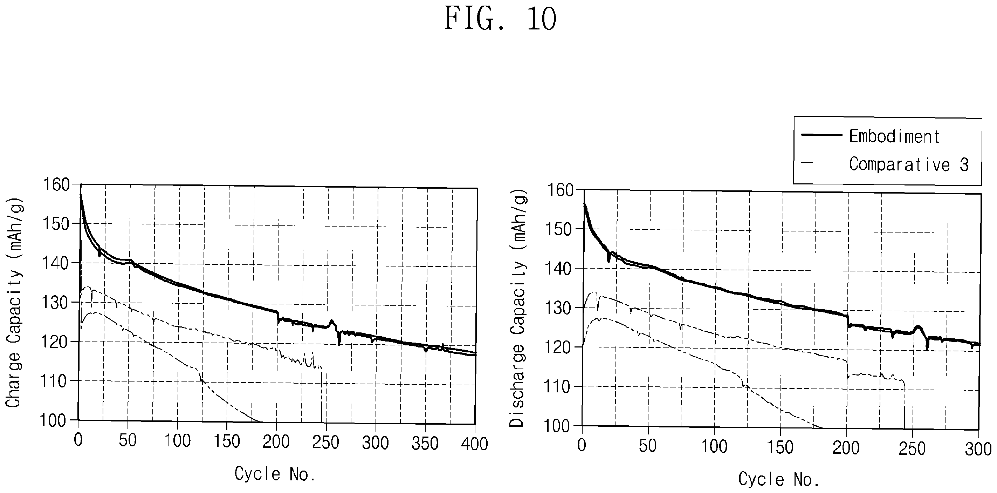

The charge/discharge test was conducted twice for the all-solid-state batteries according to Embodiment and Comparative 3. The result of lifespan characteristics is shown in FIG. 10.
Referring to FIG. 10, it may be ascertained that a capacity retention rate of Embodiment is superior to the capacity retention rate of Comparative 3.

Evaluation 6: Lifespan Characteristics

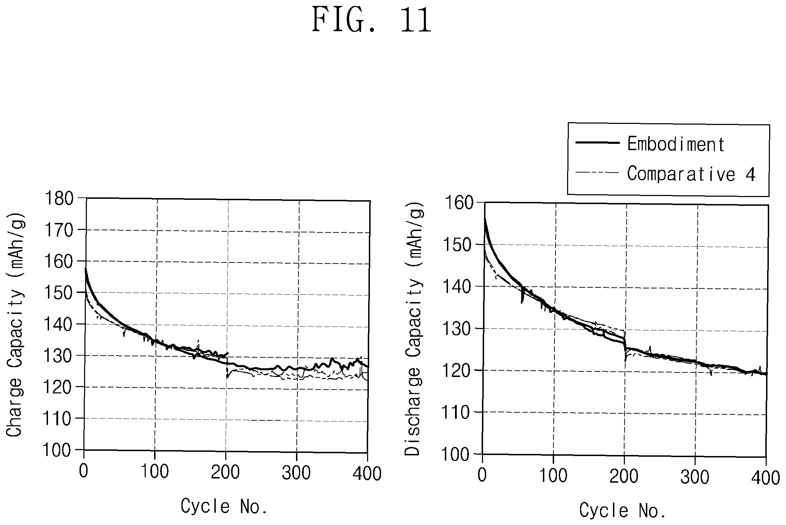

Each of the all-solid-state batteries according to Embodiment and Comparative 4 was charged (0.33 C CC/CV charging 4.25 V 0.05 C cut) and discharged (0.33 C CC discharging 2.50 V cut) as a first cycle, and then, the all-solid-state battery was charged (1.0 C CC/CV charging 4.25 V 0.05 C cut) and discharged (0.5 C CC discharging 3.0 V cut) for 400 cycles. The charge/discharge test was conducted twice for the all-solid-state batteries according to Embodiment and Comparative 4. The result of lifespan characteristics is shown in FIG. 11.
Referring to FIG. 11, it may be ascertained that a capacity retention rate of Embodiment is superior to that of Comparative 4.
A binder in a positive electrode for an all-solid-state battery according to some example embodiments of the present disclosure may include a first non-aqueous binder and a second non-aqueous binder. As the binder includes the first and second non-aqueous binders, it may be possible to improve an adhesive force between a positive electrode current collector and a positive electrode active material layer including the binder.
In addition, the positive electrode may be included to provide an all-solid-state battery with improved stability and electrochemical properties.
While this disclosure has been described in connection with what is presently considered to be example embodiments, it is to be understood that the present disclosure is not limited to the disclosed example embodiments, and is intended to cover various modifications and equivalent arrangements included within the spirit and scope of the appended claims, and therefore the aforementioned embodiments may be understood to be examples but not limiting this disclosure in any way.

**Claims**

1. **A positive** electrode for an all-solid-state battery (10), the positive electrode comprising:

 a positive electrode current collector (110); and
 a positive electrode active material layer (120) on the positive electrode current collector (110),
 wherein the positive electrode active material layer (120) comprises:

 a sulfide-based solid electrolyte;
 a binder that comprises a first non-aqueous binder (BD1) and a second non-aqueous binder (BD2); and
 a positive electrode active material,

 wherein the first non-aqueous binder (BD1) comprises a fluorine-based binder, and
 wherein the second non-aqueous binder (BD2) comprises an acrylate-based binder.

2. The positive electrode of claim 1, wherein the binder in the positive electrode active material layer (120) is present in an amount in a range of $\geq 1$ wt% to $\leq 1.5$ wt% relative to 100 wt% of the positive electrode active material layer (120).

3. The positive electrode of claim 1 or 2, wherein an amount of the first non-aqueous binder (BD1) in the binder is equal to or greater than an amount of the second non-aqueous binder (BD2) in the binder.

4. The positive electrode according to any one of claims 1 to 3, wherein:

the first non-aqueous binder (BD1) in the binder is present in an amount in a range of $\geq 50$ wt% to $\leq 90$ wt% relative to 100 wt% of the binder, and
the second non-aqueous binder (BD2) in the binder is present in an amount in a range of $\geq 10$ wt% to $\leq 50$ wt% relative to 100 wt% of the binder.

5. The positive electrode according to any one of claims 1 to 4, wherein the first non-aqueous binder (BD1) comprises at least one of poly(vinylidenefluoride-co-hexafluoropropylene) (P(VDF-HFP)), poly(vinylidenefluoride-co-trifluoroethylene) (P(VDF-TrFE)), poly(vinylidenefluoride-co-chlorotrifluoroethylene) (P(VDF-CTFE)), poly(vinylidenefluoride-co-tetrafluoroethylene) (P(VDF-TFE)), and poly(vinylidenefluoride-co-hexafluoropropylene-co-trifluoroethylene) (P(VDF-HFP-TrFE)).

6. The positive electrode according to any one of claims 1 to 5, wherein the second non-aqueous binder (BD2) comprises at least one of polyacrylic acid (PAA), polymethyl methacrylate (PMMA), poly(butyl acrylate), poly(ethyl acrylate), and poly(2-ethylhexyl acrylate).

7. The positive electrode according to any one of claims 1 to 6, wherein an adhesive force between the positive electrode active material layer (120) and the positive electrode current collector (110) is in a range of $\geq 0.5$ gf/mm to $\leq 2.5$ gf/mm.

8. The positive electrode according to any one of claims 1 to 7, wherein the sulfide-based solid electrolyte comprises an argyrodite-type compound comprising $Li_{7-a}M_aPS_{6-c}X_c$ ($0 \leq a \leq 2$ and $0 \leq c \leq 2$),

wherein X comprises at least one of F, Br, Cl, and I, and
wherein M comprises at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), and bismuth (Bi).

9. A method of manufacturing a positive electrode for an all-solid-state battery (10), the method comprising:

preparing a slurry; and
coating the slurry on a positive electrode current collector (110) to form a positive electrode active material layer (120),
wherein preparing the slurry comprises mixing a positive electrode active material, a sulfide-based solid electrolyte, and a binder, in a non-polar solvent,
wherein the binder comprises:

a first non-aqueous binder (BD1) comprising a fluorine-based binder; and
a second non-aqueous binder (BD2) comprising an acrylate-based binder.

10. The method of claim 9, wherein the binder in the positive electrode active material layer (120) is present in an amount in a range of $\geq 1$ wt% to $\leq 1.5$ wt% relative to 100 wt% of the positive electrode active material layer (120).

11. The method of claim 9 or 10, wherein an amount of the first non-aqueous binder (BD1) in the binder is equal to or greater than an amount of the second non-aqueous binder (BD2) in the binder.

12. The method according to any one of claims 9 to 11, wherein:

the first non-aqueous binder (BD1) in the binder is present in an amount in a range of $\geq 50$ wt% to $\leq 90$ wt% relative to 100 wt% of the binder, and

the second non-aqueous binder (BD2) in the binder is present in an amount in a range of $\geq$ 10 wt% to $\leq$ 50 wt% relative to 100 wt% of the binder.

13. The method according to any one of claims 9 to 12, wherein the first non-aqueous binder (BD1) comprises at least one of poly(vinylidenefluoride-co-hexafluoropropylene) (P(VDF-HFP)), poly(vinylidenefluoride-co-trifluoroethylene) (P(VDF-TrFE)), poly(vinylidenefluoride-co-chlorotrifluoroethylene) (P(VDF-CTFE)), poly(vinylidenefluoride-co-tetrafluoroethylene) (P(VDF-TFE)), and poly(vinylidenefluoride-co-hexafluoropropylene-co-trifluoroethylene) (P(VDF-HFP-TrFE)).

14. The method according to any one of claims 9 to 13, wherein the non-polar solvent comprises at least one of butylate, toluene, xylene, anisole, hexane, heptane, dibromomethane, dichloroethane, ethanol, glycol ether, and a combination thereof.

15. The method according to any one of claims 9 to 14, wherein the slurry has a viscosity at a temperature of about 20°C in a range of $\geq$ 1,000 mPa·s to $\leq$ 10,000 mPa·s.

# FIG. 1

# FIG. 2

# FIG. 3

10

WI2

WI1

WI4  WI3

A                    A'

100
310
320
200

D2

D3  D1

# FIG. 4

10

WI1

| 110 |
| 120 | 100
| 310 |
| 320 | 300
| 220 | 200
| 210 |

A             A'

WI2

D3
↑
→ D1

# FIG. 5

10

WI1

| 110 |
| 120 | 100
| 310 |
| 320 | 300
| 220 |
| 400 | 200
| 210 |

A             A'

WI5

WI2

D3
↑
→ D1

# FIG. 6

<u>10</u>

WI1

110 } 100
120
500
310 } 300
320
220 } 200
400
210

A ⟶ A'

WI5
WI2

D3
↑
→ D1

# FIG. 7

<u>M</u>

110

BD1    BD2      SE  AM
BD
120

EP 4 712 152 A1

# FIG. 8

# FIG. 9

EP 4 712 152 A1

FIG. 10

EP 4 712 152 A1

FIG. 11

# FIG. 12

1200

| Preparing slurry | ~1210 |

$\downarrow$

| Coating slurry on positive electrode current collector to form positive electrode active material layer | ~1220 |

## EUROPEAN SEARCH REPORT

Application Number

EP 25 20 0118

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/069310 A1 (MIN MYOUNGKI [KR] ET AL) 3 March 2022 (2022-03-03) * paragraphs [0153], [0161] * ----- | 1-15 | INV. H01M4/04 H01M4/131 H01M4/136 H01M4/525 |
| A | US 2021/194047 A1 (VILLALUENGA IRUNE [US] ET AL) 24 June 2021 (2021-06-24) * paragraphs [0084] - [0086] * ----- | 1-15 | H01M4/62 H01M10/0585 ADD. H01M4/02 |

TECHNICAL FIELDS SEARCHED (IPC)

H01M

The present search report has been drawn up for all claims

| Place of search | Date of completion of the search | Examiner |
|---|---|---|
| Munich | 20 January 2026 | Letilly, Marika |

EPO FORM 1503 03.82 (P04C01)

## ANNEX TO THE EUROPEAN SEARCH REPORT
## ON EUROPEAN PATENT APPLICATION NO.

EP 25 20 0118

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2026

| Patent document cited in search report | | Publication date | Patent family member(s) | | Publication date |
|---|---|---|---|---|---|
| US 2022069310 | A1 | 03-03-2022 | CN | 114122328 A | 01-03-2022 |
| | | | EP | 3961751 A1 | 02-03-2022 |
| | | | HU | E063958 T2 | 28-02-2024 |
| | | | JP | 7284227 B2 | 30-05-2023 |
| | | | JP | 2022041999 A | 11-03-2022 |
| | | | KR | 20220028933 A | 08-03-2022 |
| | | | PL | 3961751 T3 | 02-10-2023 |
| | | | US | 2022069310 A1 | 03-03-2022 |
| | | | US | 2025174664 A1 | 29-05-2025 |
| US 2021194047 | A1 | 24-06-2021 | US | 2021194047 A1 | 24-06-2021 |
| | | | WO | 2021127548 A1 | 24-06-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240124427